# EUROPEAN PATENT APPLICATION

(11) **EP 3 508 052 A1**
(43) Date of publication of application: **10.07.2019**
(21) Application number: 18210851.4
(22) Date of filing: 06.12.2018
(51) Int. Cl.: A01F 15/08, F16F 15/31, F16F 15/315

(54) **COMPOSITE DUAL-MASS FLYWHEEL, SYSTEM COMPRISING SAID FLYWHEEL, AND RELATED METHOD**

(30) Priority: 12.12.2017 IT 201700143469
(71) Applicant: Bondioli, Edi, 46029 Suzzara (MN) (IT)
(72) Inventor: Bondioli, Edi, 46029 Suzzara (MN) (IT)
(74) Representative: Mannucci, Michele

(57) **Abstract**

A composite flywheel (13), comprising a primary flywheel (15) integral with an input shaft (31) and a secondary flywheel (17) coaxial with the primary flywheel (15). The secondary flywheel (17) and the primary flywheel (15) are constrained so that they can rotate freely with respect to each other. A coupling device (61) is further provided, adapted selectively to: transmit power from the input shaft (31) to the secondary flywheel (17); and disengage the secondary flywheel (17) from the input shaft (31).

## Description

### TECHNICAL FIELD

The present invention relates to improvements to flywheels for use on mechanical transmissions. The invention also relates to systems and methods using these flywheels.

### BACKGROUND TO THE INVENTION

Flywheels are members for smoothing the operation of mechanical systems comprising a power source and a driven member. In automotive, flywheels are arranged on the transmission between the reciprocating IC engine and the driving wheels. In this case, the flywheel function is to make the torque generated by the reciprocating engine more uniform. Dual-mass flywheels are known, in which two coaxial masses are connected to each other through viscous-elastic members, in order to dampen the torsional oscillations. The two masses rotate synchronously except for the angular oscillations due to vibrations. US-A-2012/0234131 discloses a dual-mass flywheel of this type, in which the two masses can be rigidly connected to each other under certain operating conditions, preventing any movement relative to each other.

GB-A_2107428 discloses a variable capacity flywheel mechanism, wherein an auxiliary flywheel is connected to a main flywheel by means of an electromagnetic cutch. The clutch is actuated in response to a magnetizing signal in accordance with the rotary speed of an engine crankshaft.

In many applications, the load applied to the power source is discontinuous, i.e. the load applies a cyclically discontinuous resistant torque to the mechanical transmission.

In this case, the flywheel function is to smooth the operation, which (due to the periodic load) would be subject to continuous speed variations without the flywheel. The greater the inertia of the flywheel, the lower the speed variations generated by the periodic load and the more regular the operation of the driven machine and the driving machine (power source). However, by increasing the flywheel inertia, the starting and stopping phases of the driven machine become more difficult and time consuming.

The start is particularly critical when the power source is an IC engine, which tends to turn off or supplies very low starting torque, if the rotational speed is too low. Therefore, in some applications it is necessary to use large IC engines to overcome the starting phase, even if the average power absorbed by the working load does not require all the power deliverable by these motors.

In other words, it is necessary to oversize the engine with respect to the power required in steady-state conditions, for the sole purpose of being able to start the driven machine.

Problems of this type are frequent in the agricultural sector, where tractors actuate agricultural machines with cyclically variable loads.

Nowadays, tractors are equipped with so-called soft start systems, characterized by an initial start-up phase, wherein for a few seconds a clutch inside the tractor transmission limits the torque supplied to the power take-off, in order to avoid that the IC engine switches off. However, the soft start systems are often not enough, as they require too long internal clutch slipping times, with consequent overheating. The operator shall often make some starts in succession with the soft start system, which gradually bring the flywheel and the machine to an initial rotation speed such as to allow the power take-off to start the machine without switching off the IC engine. It is evident that a succession of starts causes overheating that is harmful to the internal friction of the soft start. Moreover, these operations are time-consuming and need a manual intervention that requires particular expertise.

Problems of this kind are typically for example in large square balers. These machines are characterized by a compression chamber for pressing the material to be packaged, in which the material is pressed by means of a piston actuated by a rod-crank mechanism. The piston presses the material for about a quarter of the travel generating a periodic load characterized by very high thrust peaks followed by virtually zero thrust strokes.

Due to the type of operation, the square balers require large flywheels. Thanks to the continuous search for continuously increasing performance, aimed at increasing the number of bales produced per hour and the density thereof, nowadays these machines are equipped with flywheels of ever larger size with the aim of increasing the inertia thereof and have more energy available to smooth and reduce loads on mechanical transmissions during operation. But this made the start-up phases even more difficult, even for more powerful tractors, for the reasons mentioned above.

A need therefore exits to improve the power transmission from a power source to a variable load, in order to alleviate or reduce at least partly the disadvantages described above.

### SUMMARY OF THE INVENTION

According to an aspect, the invention provides a system including a power source, a driven machine and a power transmission therebetween, according to claim 1. The transmission includes a composite flywheel comprising a primary flywheel, integral with an input shaft, and a secondary flywheel coaxial with the primary flywheel. The secondary flywheel and the primary flywheel are coupled such that they can rotate freely with respect to each other. Furthermore, a coupling device is provided that, according to the operating conditions of the machine in which the flywheel is inserted, can transmit power from the input shaft to the secondary flywheel, and selectively disconnect the secondary flywheel from the input shaft.

Contrary to the composite flywheels used in the automotive sector, in which the two masses are constantly maintained in reciprocal torsional connection through a viscous-elastic coupling, in the composite flywheel described herein the primary flywheel and the secondary flywheel can take a complete torsional disengagement condition, wherein the primary flywheel can rotate around its own axis, while the secondary flywheel remains idle, and no torque is transmitted thereto.

In this way, when the coupling device is switched to the condition in which it keeps the secondary flywheel disconnected from the input shaft, the power available from a power source can be integrally used to accelerate the primary flywheel and a driven machine connected to the power source. The secondary flywheel can be coupled, preferably in a gradual manner, to the input shaft after the input shaft and the primary flywheel keyed onto it have achieved a given operating condition, e.g. a given angular speed, i.e. a given number of revolutions.

In this way it is possible to start a machine provided with a large mass flywheel, using a relatively limited power source, i.e. a source dimensioned to supply sufficient power under steady-state operating conditions of the driven machine, but which would not have sufficient breakaway power to initiate rotation of the whole inertial mass of the flywheel. By dividing the flywheel into two parts, i.e. a primary flywheel and a secondary flywheel, the angular acceleration of the flywheel mass occurs in two stages.

It is also possible to facilitate stopping of the driven machine connected to the composite flywheel, as in this case the secondary flywheel can be released from the primary flywheel braking only the primary flywheel and the machine connected thereto.

In principle, it can be provided that the coupling device is adapted to connect the secondary flywheel to the input shaft. In particularly advantageous embodiments, the coupling device is adapted to selectively couple and decouple torsionally the primary flywheel and the secondary flywheel with respect to each other, with a direct connection. In other words, the coupling device can be arranged between the primary flywheel and the secondary flywheel and adapted, so as to selectively couple torsionally the secondary flywheel to, and decouple it from, the primary flywheel directly. In this way, the primary flywheel acts as a driving flywheel and the secondary flywheel as a driven flywheel.

In this context, torsional coupling means a connection between two members rotating around an axis, which allows to transmit torque from one to the other of said rotating members. Therefore, torsional connection between the primary flywheel and the secondary flywheel means a mechanical connection, which allows to transfer torque from the primary flywheel to the secondary flywheel.

In some embodiments, the primary flywheel is torsionally constrained to the input shaft and to an output shaft. The secondary flywheel can be rotatably supported on the output shaft and can be selectively coupled to and decoupled from the primary flywheel through the coupling device.

Advantageously, the coupling device can be adapted to modulate the torque transmitted to the secondary flywheel. In embodiments described herein, the coupling device is adapted to modulate the torque transmitted to the secondary flywheel according to the rotation speed of the secondary flywheel. In other embodiments a time control can be provided, in which the transmitted torque is gradually increased as a function of time. In both cases, the secondary flywheel is accelerated gradually.

In advantageous embodiments, the coupling device may comprise a clutch, for example a hydraulically controlled clutch, or in general a hydraulically controlled coupling. In other embodiments, an electrical control may be provided.

When the coupling device is hydraulically controlled, the torque transmitted to the secondary flywheel can be controlled through the pressure of a control fluid, for example oil, delivered by a power unit. More generally, when the coupling device is adapted to modulate the torque transmitted to the secondary flywheel, said coupling device can be actuated by means of a modulated signal, which may be the pressure of a control fluid, or an electrical voltage, or another parameter that can be controlled, for example directly or indirectly through a central electronic control unit.

However, the control may be even manual. For example, a friction coupling device or other device can be provided, having a manual control of the transmitted torque. If the coupling device is of the hydraulic type, a manually operated pressure control valve can be provided. In other embodiments, for example in the case of a mechanically controlled coupling device, a manual actuator can be provided, acting on the coupling device to increase or decrease the transmitted torque. A manual actuator may include, for example, a screw system.

In some embodiments, the flywheel comprises a power output shaft, coaxial with the primary flywheel and the secondary flywheel. The secondary flywheel can be idly supported on the output shaft. When the coupling device is hydraulically controlled, a supply duct can be provided to supply a control fluid to the coupling device, the supply duct being provided in the output shaft. The fluid can enter the duct at an end of the power output shaft facing a driven machine.

In some embodiments, the secondary flywheel is torsionally constrained to a shaft supporting the secondary flywheel, which shaft can be suitably hollow so as to house bearings rotatingly supporting the secondary flywheel on a power output shaft. The primary flywheel can be in turn torsionally constrained to a shaft supporting the primary flywheel. The primary flywheel support shaft can be hollow and coaxial with the secondary flywheel support shaft and can be externally supported on it by means of primary flywheel support bearings.

In this way, a coaxial configuration of members is achieved, comprising: a power output shaft, on which the secondary flywheel support shaft is mounted by means of bearings; the primary flywheel support shaft, which is hollow and surrounds the secondary flywheel support shaft and is supported on the latter by means of bearings. The coupling device can be adapted to: transmit torque from the primary flywheel support shaft to the secondary flywheel support shaft; and to selectively decouple said two support shafts from each other.

According to particularly advantageous embodiments, the primary flywheel and the secondary flywheel have different masses and/or inertias, for example, the moment of inertia of the primary flywheel can be lower than the moment of inertia of the secondary flywheel.

In some embodiments, the primary flywheel and the secondary flywheel are adapted so as to reduce the overall axial bulk. To this end, it is for example possible to configure one of the primary flywheel or the secondary flywheel with a mass distributed on an annular volume of larger diameter and the other of the two flywheels with a mass distributed on an annular volume of smaller diameter, so that the lower annular mass is contained inside the greater annular mass.

The system disclosed herein comprises a central control unit adapted to supply a controlled torque to the secondary flywheel as a function of at least one operating parameter, for example a parameter correlated to the rotation speed of the primary flywheel or the secondary flywheel.

In embodiments disclosed herein, the driven machine is a square baler. In other embodiments and more generally, the driven machine can be a machine with a periodic load, strongly variable between a maximum value and a minimum value.

The present invention also concerns a method for operating a driven machine through a power source and a mechanical transmission comprising a composite flywheel as disclosed herein. The method may comprise the steps of:
starting rotation of the transmission and of the primary flywheel with the coupling device disengaged, gradually increasing the rotation speed of the primary flywheel keeping the secondary flywheel disengaged from the primary flywheel and idle on an output shaft of the composite flywheel;
when a switching operational condition has been achieved, switching the coupling device so as to connect the secondary flywheel to the primary flywheel and to transmit torque from the primary flywheel to the secondary flywheel.

According to another aspect, a method is provided for braking a driven machine actuated by means of a power source and a mechanical transmission associated with a composite flywheel as disclosed above. The method comprises the step of disengaging the secondary flywheel from the primary flywheel through the coupling device and braking the driven machine with the secondary flywheel idle with respect to the mechanical transmission.

### BRIEF DESCRIPTION OF THE DRAWINGS

The invention will be better understood by following the description and the accompanying drawing, which shows a non-limiting exemplary embodiment of the invention. More in particular, in the drawing:
Fig. 1 is a diagram of a power source and a driven machine, connected to each other by means of a mechanical transmission with a flywheel;
Fig. 2 is a cross-section of a flywheel in an embodiment;
Fig. 3 is an enlargement of Fig.2;
Fig. 4 is a section of a flywheel in a further embodiment.

### DETAILED DESCRIPTION OF AN EMBODIMENT

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

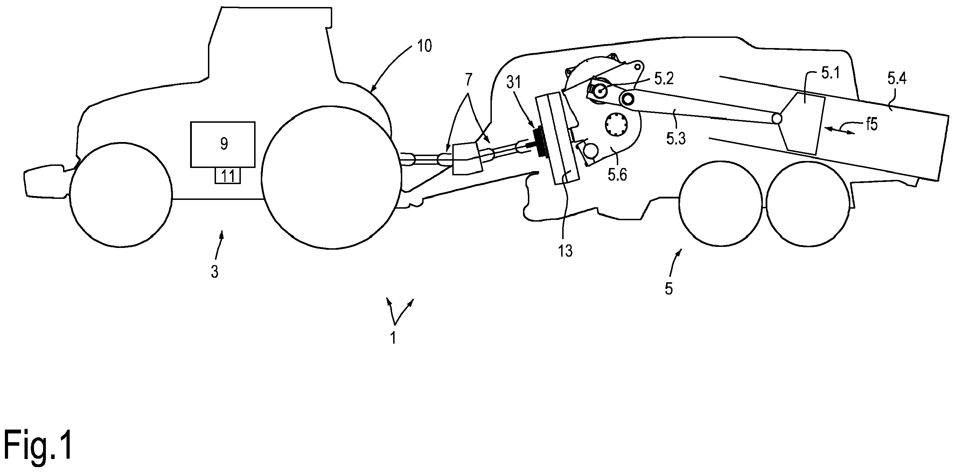

Fig.1 shows an arrangement 1 comprising a power source 3, a driven machine 5, hereinafter also generally referred to as a "load", and a mechanical transmission 7 connecting the power source 3 to the driven machine 5. In the example embodiment of Fig.1, the power source is an IC engine 9 of a tractor 10. Reference number 11 indicates a hydraulic unit, with which the tractor 10 is provided, which supplies pressurized oil for the purposes which will be explained below. In other embodiments, the hydraulic unit 11 can be on board the driven machine 5 instead of the tractor 3.

Just by way of particularly advantageous but not limiting example, the driven machine 5 is a large square baler. As mentioned above, in these machines the resistant torque varies significantly. The power supplied by the power source 3 is used, in this case, to drive a piston 5.1 by means of a crankshaft 5.2 and a rod 5.3. The piston 5.1 moves reciprocatingly (double arrow f5) in a chamber 5.4.

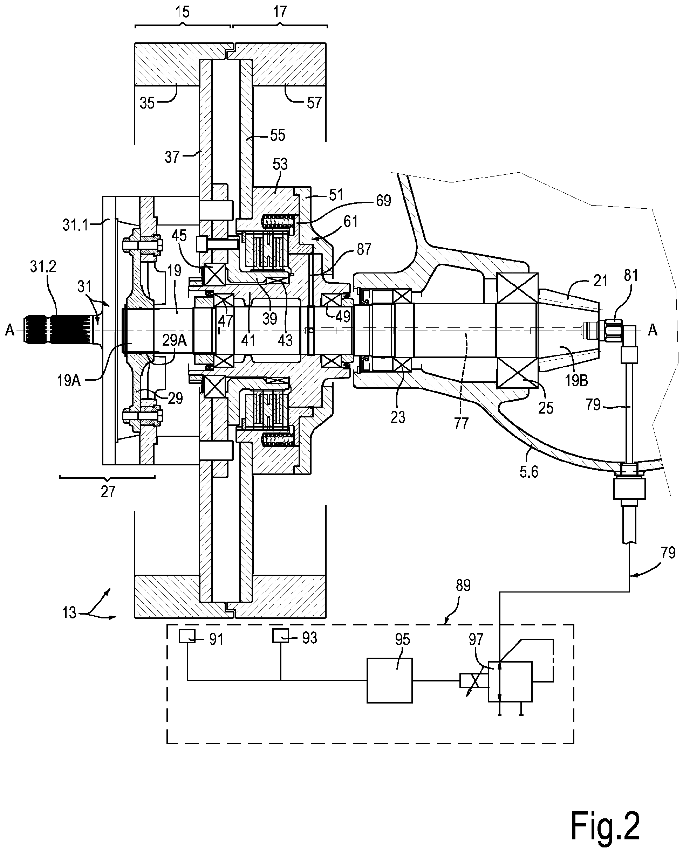

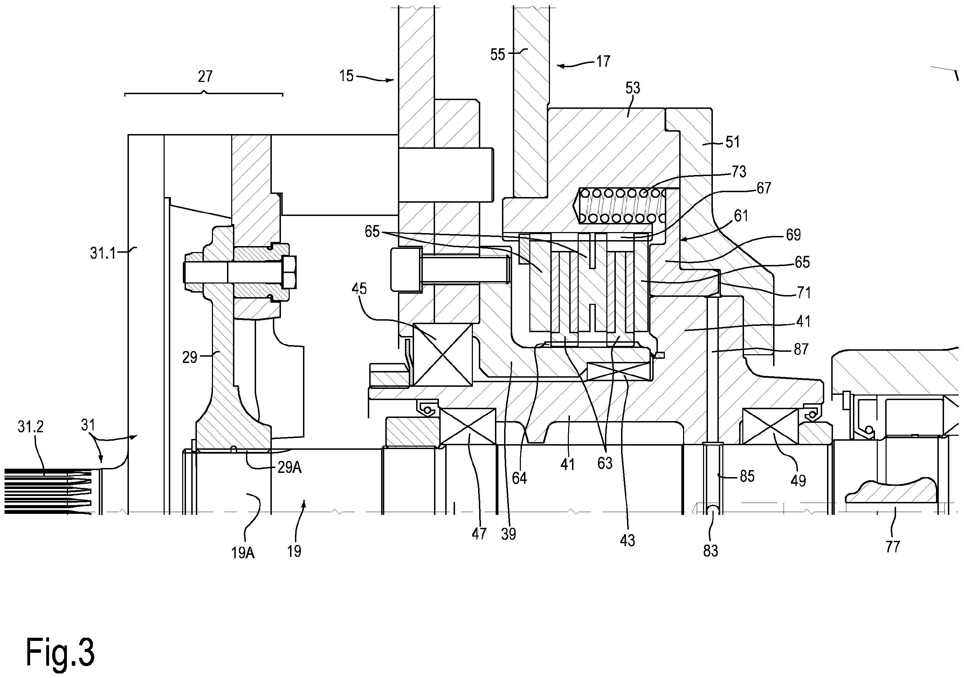

The crank shaft 5.2 is housed in a casing or box 5.6, in which a transmission shaft enters, described below, to which a composite flywheel 13 is associated, the structure of which will be described in detail hereinafter with reference to Figs. 2 and 3. The flywheel 13 is a composite flywheel, i.e. it comprises a primary flywheel and a secondary flywheel, which can be selectively coupled to each other to rotate together, or can be torsionally disengaged from each other, so that while one rotates integrally with the mechanical transmission 7, the other one is idle and therefore does not absorb power from the transmission. The primary flywheel and the secondary flywheel form a dual-mass system, where the masses can both be connected to the power source 3, or one is connected to the power source 3 and the other remains idle. In this way it is possible to modulate the flywheel inertia as required, as described in detail below.

With a flywheel of this type, it is possible to have a very high inertial mass, represented by the sum of the primary flywheel and the secondary flywheel, when the system comprising the driven machine 5 and the power source 3 rotate at working speed. The high inertia of the large rotating mass makes the operation uniform. Vice versa, when it is useful to have a lower inertial mass, especially in the start and stop transients, the inertial mass mechanically connected to the transmission 7 to receive power from the power source 3 is only the mass of the primary flywheel.

It should be understood that the concept can be extended to more than two masses. In general, there will be a primary flywheel and one or more secondary flywheels, each of which can be selectively torsionally coupled to, or decoupled from, the primary flywheel.

Furthermore, while in Figs. 2 and 3 the primary flywheel and the secondary flywheel have approximately the same mass and substantially the same inertia, it must be understood that this is not necessary. In some embodiments, for example, the primary flywheel can have a mass smaller or larger than the secondary flywheel and/or such a mass distribution as to present a lower or greater inertia. For example, the primary flywheel can have a mass equal to half the mass of the secondary flywheel.

The composite flywheel described herein may be particularly useful in applications in which the flywheel rotates at speeds in the order of 1000-1200 revolutions per minute. In applications of particular interest, for example for the transmission of motion to large square balers, the flywheel can have a diameter of 1 m or more and a weight equal to, or greater than, 600 kg, for example comprised between 600 and 900 kg. Flywheels of this size are particularly suitable for use in large square balers with pistons having for example 45-50 strokes per minute.

With reference to Figs. 2 and 3, in the illustrated embodiment the composite flywheel 13 comprises a primary flywheel 15 and a secondary flywheel 17, coaxial to each other. The axis of the composite flywheel 13, which coincides with the axis of a shaft 19 of the driven machine or load 5, is indicated with A-A. The shaft 19 also represents the power output shaft from the composite flywheel 13 towards the driven machine 5. The primary flywheel 15 is torsionally coupled to the shaft 19 while the secondary flywheel 17 is supported idle on the shaft 19 in the manner described below.

The shaft 19 has a first end 19A facing the power source 3 and a second end 19B inserted in the casing 5.6 of the driven machine 5. The second end 19B is provided with a gear, for example in this case a bevel gear 21, which transmits rotary motion from the shaft 19 to the crankshaft 5.2 through mechanical members, not shown, housed in the casing 5.6. The reference numbers 23 and 25 indicate bearings supporting the shaft 19 in the casing 5.6.

The primary flywheel 15 is permanently coupled torsionally to the shaft 19 by means of a connecting element 27. In the illustrated embodiment, the connecting element 27 comprises a disk 29 coaxial with the shaft 19 and coupled torsionally to the first end 19A of the shaft 19, for example by means of a coupling 29 with splined profile. The connecting element 27 also forms a mechanical connection with an input shaft 31 of the composite flywheel 13. The input shaft 31 comprises a flange 31.1 and a splined profile 31.2, through which the input shaft 31 is connected to the other components of the mechanical transmission 7.

The primary flywheel 15 comprises a main mass 35, which may have an annular shape to concentrate the mass of the primary flywheel 15 in the peripheral region thereof, thus increasing the inertia thereof. The main mass 35 is rigidly connected to a flange 37, which is in turn rigidly connected to a support shaft 39 of the primary flywheel 15. The support shaft 39 is substantially a flanged hollow shaft and houses bearings supporting the primary flywheel 15, as described below. Externally, the support shaft 39 of the primary flywheel 15 features means for connecting to a coupling device between the primary flywheel 15 and the secondary flywheel 17. The support shaft 39 of the primary flywheel also constitutes a drawing shaft of the secondary flywheel 17, as explained below.

The support shaft 39 of the primary flywheel 15 houses a support shaft 41 of the secondary flywheel 17. The support shaft 39 of the primary flywheel 15 and the support shaft 41 of the secondary flywheel 17 are coaxial with each other, and between the two support shafts 39, 41 bearings 43, 45 are provided, through which the primary flywheel 15 is supported on the support shaft 41 of the secondary flywheel 17. The support shaft 41 of the secondary flywheel 17 is in turn supported by bearings 47, 49 on the shaft 19. The bearings 47, 49 are arranged inside the support shaft 41 of the secondary flywheel 17.

The support shaft 41 of the secondary flywheel 17 is integral, through a flange 51, with an outer annular body 53, which is in turn rigidly connected to a flange 55 of the secondary flywheel 17. The flange 55 is rigidly connected to a main mass 57 of the secondary flywheel 17. In this way, similarly to the primary flywheel 15, also for the secondary flywheel 17 the main mass 57 is concentrated in the outer peripheral part so as to increase the inertia of the secondary flywheel 17.

In the illustrated embodiment, the two masses 35 and 57 are approximately equal, but this is not necessary. As mentioned above, the primary flywheel 15 and the secondary flywheel 17 may have different masses and therefore different inertias. In some embodiments, the primary flywheel 15 may have a lower inertia than the secondary flywheel 17. The different inertia can be obtained with different masses and/or with a different mass distribution with respect to the rotation axis A-A.

With the arrangement described above, it is possible to connect the primary flywheel 15 to the power source 3 so as to rotate the primary flywheel 15 through the input shaft 31 around the axis A-A. The primary flywheel 15 integrally rotates with the input shaft 19 of the driven machine 5 thanks to the connection provided by the splined profile 29A. The primary flywheel 15 is supported by the bearings 43, 45 and can rotate independently of the secondary flywheel 17, which is in turn supported on the shaft 19 by the bearings 47, 49.

In some operational conditions, the secondary flywheel 17 can be completely disengaged from the primary flywheel 15, remaining idle on the shaft 19 while the main flywheel 15 and the shaft 19 rotate. In other operational conditions, the secondary flywheel 17 can be torsionally coupled to the primary flywheel 15 so that a torque is applied thereto, which causes the secondary flywheel to rotate. The reciprocal coupling between primary flywheel 15 and secondary flywheel 17 can be made so as to modulate the transmitted torque, so as to gradually coupling the secondary flywheel 17 to the primary flywheel 15. In this way the primary flywheel 15 and the shaft 19 can be angularly accelerated to a first operational speed, and then the secondary flywheel 17 can be gradually accelerated to the same operational speed as the primary flywheel 15. It is also possible, once the synchronization between the primary flywheel 15 and the secondary flywheel 17 has been achieved, to accelerate the two flywheels integrally up to a second operational speed.

In order to couple the secondary flywheel 17 to the primary flywheel 15, a coupling device is provided, indicated as a whole with number 61. In some embodiments, the coupling device 61 comprises a clutch. In the illustrated embodiment, the coupling device 61 comprises a hydraulic clutch controlled by means of a control valve for controlling the pressure of a control fluid, so that, by modulating the fluid pressure, the torque transmitted from the primary flywheel 15 to the secondary flywheel is modulated.

With particular reference to Fig. 3, the coupling device 61 comprises a series of internal drawing discs 63, torsionally coupled to the primary flywheel 15, for example by means of a splined profile coupling 64. The internal drive discs 63 rotate integrally with the primary flywheel 15. Between internal drive disks 63, external drive disks 65 are intercalated, which are torsionally constrained, by means of a splined profile 67, to the outer annular body 53 of the secondary flywheel 17 and rotate integrally thereto. Thanks to the splined couplings 64, 67 the drive disks 63, 65 can be pressed against each other so as to transmit torque from the internal drive disks 63 (and hence from the primary flywheel 15) to the external drive disks 65 (and then to the secondary flywheel 17). To this end, the drawing discs are provided, as in the usual clutches, with coatings made of a material having high coefficient of friction.

In the illustrated embodiment, to press the internal drawing discs 63 and the external drawing discs 65 against each other a toroidal piston 69 is provided, housed in an annular cylinder 71 formed between the support shaft 41 of the secondary flywheel 17 and the flange 51. The piston 69 and the cylinder 71 form a cylinder-piston actuator of the single action type, controlling the coupling device 61. Springs 73 push the piston 69 to an idle position, moving it away from the drawing discs 63, 65. Pressure control fluid, for example oil, delivered into the annular chamber formed between the cylinder 71 and the piston 69, pushes the piston 69 against the action of the springs 73 in order to press the drawing discs 63, 65 against each other, thus generating a drawing coupling between the primary flywheel 15 and the secondary flywheel 17.

To feed the pressurized control fluid to the coupling device 61 a duct 77 may be provided in the shaft 19, preferably coaxial thereto. As can be seen in particular in Fig. 2, the duct 77 exits on the end 19B of the shaft 19, i.e. on the end facing the driven machine or load 5. The duct 77 can be connected to a hydraulic circuit 79 through a rotating joint 81, so that pressurized fluid can be fed into the duct 77 while the shaft 19 rotates. The duct 77 can be connected to one or more radial holes 83, which open into an annular groove 85. The annular groove 85 is fluidly coupled to one or more openings 87, which radially extend in the support shaft 41 of the secondary flywheel 17 and connect the annular groove 85, and therefore the duct 77, to the annular chamber formed between the piston 69, the flange 51 and the support shaft 41 of the secondary flywheel 17.

With this arrangement it is possible to deliver pressurized fluid into the cylinder of the cylinder-piston actuator, of which the toroidal piston 69 is part. The fluid pushes the piston 69 against the drawing discs 63, 65, pressing them against each other to a greater or lesser extent according to the fluid pressure. By modulating the fluid pressure, it is therefore possible to modulate the torque transmitted from the primary flywheel 15 to the secondary flywheel 17.

The composite flywheel 13 can be associated with a control system 89, controlling the coupling device 61. In Fig. 2, the control system is indicated by the reference number 89. In the embodiment schematically illustrated in Fig. 2, the control system 89 comprises at least a first sensor 91 adapted to detect the rotation speed of the primary flywheel 15. The control system 89 can comprise a second sensor 93 adapted to detect the rotation speed of the secondary flywheel 17. The control system 89 can further comprise a central control unit 95, which receives signals from the sensors 91 and 93. The central control unit 95 can be interfaced with an electro-proportioning pressure-reducing valve 97 connected to the hydraulic circuit 79.

The hydraulic circuit 79 can be connected to the hydraulic unit 11 of the power source 3 (Fig. 1) or to a hydraulic unit (not shown) of the driven machine 5. Pressurized fluid, for example oil, is fed, controlled by means of the control system 89, to the coupling device 61, according to the required operational conditions.

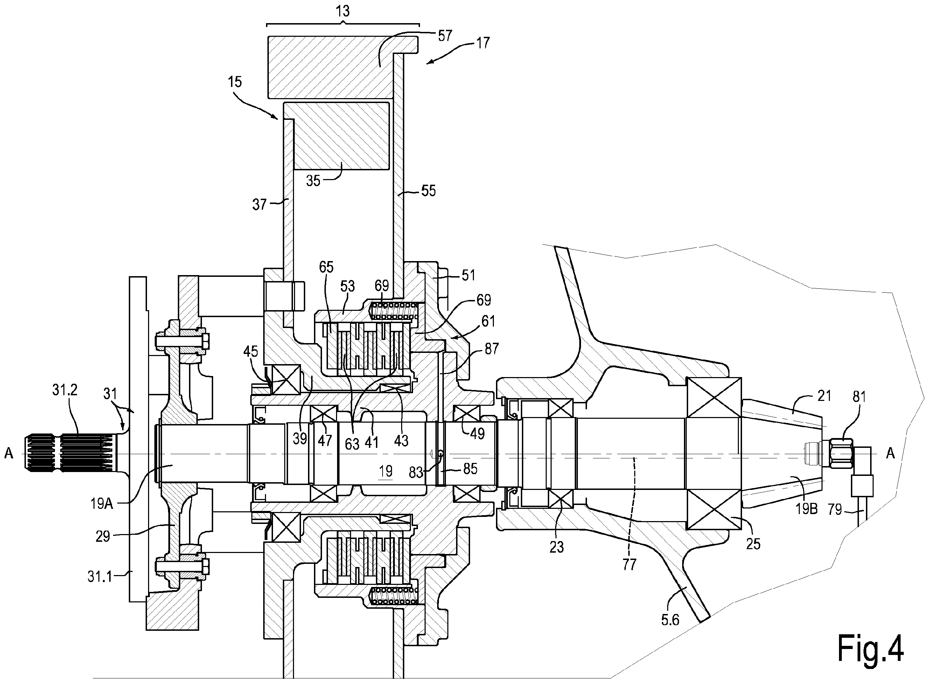

Fig. 4 is a cross section, according to a plane containing the rotation axis, of a further embodiment of a flywheel. The same reference numbers indicate the same or equivalent parts to those described with reference to Figs. 2 and 3 and they will be not described again. The main difference between the embodiment of Figs. 2, 3 and the embodiment of Fig.4 is that in Fig.4 the sizes and the shapes of the primary flywheel 15 and of the secondary flywheel 17 have been optimized, in order to improve the operation and to optimize the overall dimensions of the dual-mass flywheel 13.

In Fig. 4 the primary flywheel 15 has a smaller diameter than the secondary flywheel 17. In this way, the mass 35 of the primary flywheel 15 can be contained within the mass 57 of the secondary flywheel 17. Thus, the composite flywheel 13 has a reduced axial dimension, since the axial bulk of the primary flywheel 15 is contained within the overall bulk of the secondary flywheel 17. Moreover, the mass of the primary flywheel 15 and the spatial distribution thereof are such that the primary flywheel 15 has a moment of inertia substantially lower than the moment of inertia of the secondary flywheel 17. For example, the primary flywheel 15 may have a moment of inertia equal to half, or less, the inertia of the secondary flywheel 17.

Below, examples will be illustrated of use of the system described above.

When the load 5 is to be started, the IC engine 9, which represents the power source, is actuated at the appropriate number of revolutions, and the power take-off thereof is mechanically coupled to the input shaft 31 of the flywheel 13. The coupling device 61 is disengaged, with the piston 69 completely retracted. In this way, no torque is applied to the secondary flywheel 17 and all the mechanical power available from the mechanical power source 3 is used to accelerate the mass of the primary flywheel 15 and, through the shaft 19, the driven machine 5. The primary flywheel 15 rotates supported by bearings 43, 45, while the support shaft 41 of the secondary flywheel 17 is idle on the shaft 19 and does not rotate.

When the driving shaft of the internal combustion engine 9, and therefore the primary flywheel 15 and the shaft 19, have achieved a first given operational speed, which can be detected by the sensor 91, the central control unit 95 of the control system 89 activates the proportioning valve 97, through which the pressure of the control fluid is increased in the duct 77 and therefore, through the opening(s) 87, in the pressure chamber of the coupling device 61. The gradually increasing pressure of the control fluid pushes the toroidal piston 69 against the force of the springs 73 towards the drawing discs 63, 65 causing a gradual increase in the torque transmitted from the support shaft 39 to the secondary flywheel 17 by means of said drawing discs 63, 65. The support shaft 39 of the primary flywheel 15 therefore represents the driving shaft of the secondary flywheel 17.

The secondary flywheel 17 is thus gradually accelerated until the angular speed of the primary flywheel 15 is achieved, when the slipping of the hydraulic clutch represented by the coupling device 61 becomes zero. The sensor 93 can provide the control unit 95 with a speed signal, which allows to verify when the rotation speed of the secondary flywheel 17 reaches the rotation speed of the primary flywheel 15. At this point, through the transmission 7, the power source 3 can further accelerate the flywheel 13 and the shaft 19 of the driven machine 5.

It is also possible to perform the acceleration steps described above with a different sequence. For example, the primary flywheel 15 can be brought to the desired final rotation speed and then the secondary flywheel 17 can be gradually accelerated until reaching the same speed as the primary flywheel 15.

In further embodiments, it is possible to bring the primary flywheel 15 to a first operational speed and then to accelerate both the primary flywheel 15 from the first operational speed to a second operational working speed, and the secondary flywheel 17 from zero speed to the second operational working speed.

In any case, there is the advantage of starting the operating machine 5 using less power than would be required if the entire mass of the flywheel 13 should be accelerated from zero to the working speed in a single acceleration ramp.

The composite flywheel described above can be also used to facilitate the stopping of the driven machine 5. In fact, when it is necessary to stop the driven machine 5, the secondary flywheel 17 can be disengaged by opening the coupling device 61 and then slowing down the primary flywheel 15, the shaft 19 and the driven machine 5 until to stop them.

The acceleration, deceleration and stopping steps described above can be controlled by means of the control system 89, automatically or by means of the sensors 91, 93 and the central control unit 95. In simplified embodiments, the coupling and decoupling of the secondary flywheel 17 can be controlled manually, if necessary with the use of a manually controlled proportioning pressure-reducing valve 97.

Having described some embodiments of the composite flywheel, specific features of the present disclosure are set forth in the following clauses:
Clause 1. A composite flywheel, comprising a primary flywheel integral with an input shaft and a secondary flywheel coaxial with the primary flywheel; wherein the secondary flywheel and the primary flywheel are coupled so that they can rotate freely with respect to each other; and further comprising a coupling device adapted selectively to: transmit power from the input shaft to the secondary flywheel; and disengage the secondary flywheel from the input shaft.
Clause 2. The composite flywheel of clause 1, wherein the coupling device is adapted selectively to couple and decouple torsionally the primary flywheel and the secondary flywheel with respect to each other.
Clause 3. The composite flywheel of clause 1 or 2, wherein the primary flywheel is torsionally constrained to the input shaft and to an output shaft and the secondary flywheel is supported rotatable on the output shaft and is adapted to be selectively coupled to and decoupled from the primary flywheel through the coupling device.
Clause 4. The composite flywheel of clause 1 or 2 or 3, wherein the coupling device is adapted to modulate the torque transmitted to the secondary flywheel; and wherein the coupling device is preferably adapted to modulate the torque transmitted to the secondary flywheel according to the rotation speed of the secondary flywheel or of the primary flywheel.
Clause 5. The composite flywheel of one or more of the previous clauses, wherein the coupling device comprises a clutch.
Clause 6. The composite flywheel of one or more of the previous clauses, wherein the coupling device is a hydraulically controlled device.
Clause 7. The composite flywheel of clause 6, comprising an output shaft coaxial with the primary flywheel and with the secondary flywheel, provided with a supply duct for supplying a control fluid to the coupling device
Clause 8. The composite flywheel of clause 7, wherein the output shaft has a first end for coupling to a power source and a second end for coupling to a driven machine; wherein the supply duct has an opening on the second end of the output shaft; and wherein preferably a rotating joint is associated with the second end of the output shaft.
Clause 9. The composite flywheel of one or more of the previous clauses, wherein the secondary flywheel is torsionally constrained to a support shaft of the secondary flywheel, and wherein preferably bearings are arranged inside the support shaft of the secondary flywheel for supporting and rotating the secondary flywheel on an output shaft.
Clause 10. The composite flywheel of clause 9, wherein at least one feeding port is arranged inside the support shaft of the secondary flywheel for feeding a control fluid of the coupling device; and wherein preferably said at least one port is fluidly connected with a pressure chamber where a piston of the coupling device is housed.
Clause 11. The composite flywheel of clause 9 or 10, wherein the primary flywheel is mounted rotatable on the support shaft of the secondary flywheel.
Clause 12. The composite flywheel of one or more of clauses 9 to 11, wherein the primary flywheel is integral with a support shaft of the primary flywheel, coaxial with the support shaft of the secondary flywheel, and wherein preferably bearings are interposed between the support shaft of the primary flywheel and the support shaft of the secondary flywheel, the bearings allowing the rotation of the support shaft of the primary flywheel and the support shaft of the secondary flywheel, one with respect to the other.
Clause 13. The composite flywheel of one or more of clauses 9 to 12, wherein the coupling device is arranged outside the support shaft of the secondary flywheel and coaxially thereto.
Clause 14. The composite flywheel of one or more of clauses 9 to 13, wherein the support shaft of the secondary flywheel is integral with an external body of the coupling device.
Clause 15. The composite flywheel of clause 14, wherein in the external body of the coupling device there are arranged: first drawing discs constrained to the primary flywheel to rotate integrally therewith; second drawing discs constrained to the secondary flywheel to rotate integrally therewith; a piston mounted around the support shaft of the secondary flywheel and adapted to bias the first drawing discs and the second drawing discs against each another; and wherein preferably the support shaft, a flange of the coupling device and the piston form a pressure chamber adapted to receive a control fluid of the coupling device.
Clause 16. The composite flywheel of one or more of the previous clauses, wherein the primary flywheel has a different mass and/or a different diameter than that of the secondary flywheel.
Clause 17. A system including a power source, a driven machine and a mechanical transmission drivingly coupling the power source to the driven machine, said mechanical transmission including a composite flywheel according to one or more of the preceding clauses, and preferably a control unit adapted to connect the secondary flywheel to the primary flywheel upon achieving a value of an operating parameter of the driven machine, such as for instance a rotary speed.

## Claims

1. A system comprising
a power source (3);
a driven machine (5) actuated by said power source (3) through a mechanical transmission (7) having an input shaft (31) and an output shaft (19);
in said power transmission (7), a composite flywheel (13), comprising: a primary flywheel (15) torsionally constrained to the input shaft (31) to rotate therewith; a secondary flywheel (17) coaxial with the primary flywheel (15), wherein the secondary flywheel (17) and the primary flywheel (15) are coupled so that they can rotate freely with respect to each other; a coupling device (61) adapted selectively to transmit power from the input shaft (31) to the secondary flywheel (17), and to disengage the secondary flywheel (17) from the input shaft (31);
wherein the system is adapted to: start rotation of the mechanical transmission (7) and of the primary flywheel (15) with the coupling device (61) disengaged and gradually increasing the rotation speed of the primary flywheel (15), while keeping the secondary flywheel (17) idle and disengaged from the primary flywheel (15); and when a switching operational condition has been achieved, switching the coupling device (61) so as to transmit torque from the input shaft (31) to the secondary flywheel (17).

2. The system of claim 1, wherein the coupling device (61) is adapted selectively to couple and decouple torsionally the primary flywheel (15) and the secondary flywheel (17) with respect to each other.

3. The system of claim 1 or 2, wherein the secondary flywheel (17) is supported rotatable on the output shaft (19) and is adapted to be selectively coupled to and decoupled from the primary flywheel (15) through the coupling device (61).

4. The system of claim 1 or 2 or 3, wherein the coupling device (61) is adapted to modulate the torque transmitted to the secondary flywheel (17); preferably according to the rotation speed of the secondary flywheel (17) or of the primary flywheel (15).

5. The system of one or more of the previous claims, wherein the coupling device (61) comprises a clutch.

6. The system of one or more of the previous claims, wherein the coupling device (61) is a hydraulically controlled device.

7. The system of claim 6, comprising a supply duct (77) in the output shaft (19), adapted to supply a control fluid to the coupling device (61).

8. The system of claim 7, wherein the output shaft (19) has a first end (19A) for coupling to the power source (3) and a second end (19B) for coupling to the driven machine (5); wherein the supply duct (77) has an opening on the second end (19B) of the output shaft (19); and wherein preferably a rotating joint (81) is associated with the second end (19B) of the output shaft (19).

9. The system of one or more of the previous claims, wherein the secondary flywheel (17) is torsionally constrained to a support shaft (41) of the secondary flywheel (17), and wherein bearings (47, 49) are arranged inside the support shaft (41) of the secondary flywheel (17) for rotatingly supporting the secondary flywheel (17) on the output shaft (19).

10. The system of claim 9, wherein at least one feeding port (87) is arranged inside the support shaft (41) of the secondary flywheel (17) for feeding a control fluid of the coupling device (61); and wherein preferably said at least one port (87) is fluidly connected with a pressure chamber where a piston (69) of the coupling device (61) is housed.

11. The system of claim 9 or 10, wherein the primary flywheel (15) is mounted rotatable on the support shaft (41) of the secondary flywheel (17); wherein the primary flywheel (15) is integral with a support shaft (39) of the primary flywheel (15), coaxial with the support shaft (41) of the secondary flywheel (17); and wherein bearings (43, 45) are interposed between the support shaft (39) of the primary flywheel (15) and the support shaft (41) of the secondary flywheel (17), said bearings (43, 45) allowing the rotation of the support shaft (39) of the primary flywheel (15) and the support shaft (41) of the secondary flywheel (17), one with respect to the other.

12. The system of one or more of claims 9 to 11, wherein the coupling device (61) is arranged outside the support shaft (41) of the secondary flywheel (17) and coaxially thereto.

13. The system of one or more of claims 9 to 12, wherein the support shaft (41) of the secondary flywheel (17) is integral with an external body (53) of the coupling device (61).

14. The system of claim 13, wherein in the external body (53) of the coupling device (61) there are arranged: first drawing discs (63) constrained to the primary flywheel (15) to rotate integrally therewith; second drawing discs (65) constrained to the secondary flywheel (17) to rotate integrally therewith; a piston (69) mounted around the support shaft (41) of the secondary flywheel (17) and adapted to bias the first drawing discs (63) and the second drawing discs (65) against each another; and wherein preferably the support shaft (41), a flange (51) of the coupling device (61) and the piston (69) form a pressure chamber adapted to receive a control fluid of the coupling device (61).

15. The system of one or more of the preceding claims, comprising a hydraulic unit (11) adapted to supply pressurized control fluid to the coupling device (61), and wherein a central control unit (95) is associated with a control valve (97) for controlling a pressure under which the control fluid is supplied to the coupling device (61), the modulation of the pressure of the control fluid causing the modulation of the torque transmitted to the secondary flywheel (17).

16. The system of claim 15, comprising at least one sensor (91, 93) adapted to detect the speed of at least one of the primary flywheel (15) and the secondary flywheel (17).

17. A method for actuating a driven machine (5) through a power source (3) and a mechanical transmission (7) comprising a composite flywheel (13) having: a primary flywheel (15) integral with an input shaft (31); a secondary flywheel (17) coaxial with the primary flywheel (15), the secondary flywheel (17) and the primary flywheel (15) being coupled so that they can rotate freely with respect to each other; a coupling device (61) adapted selectively to transmit power from the input shaft (31) to the secondary flywheel (17) and to disengage the secondary flywheel (17) from the input shaft (31); said method comprising the steps of:
starting rotation of the transmission and of the primary flywheel (15) with the coupling device (61) disengaged, gradually increasing the rotation speed of the primary flywheel (15) keeping the secondary flywheel (17) disengaged from the primary flywheel (15) and idle on an output shaft (19) of the composite flywheel (13);
when a switching operational condition has been achieved, switching the coupling device (61) so as to connect the secondary flywheel (17) to the primary flywheel (15) and to transmit torque from the primary flywheel (15) to the secondary flywheel (17).

18. The method of claim 17, further comprising at least one of the following steps:
gradually accelerating the secondary flywheel (17) up to achieving the rotation speed of the primary flywheel (15) through a gradual increase in the torque transmitted from the shaft to the secondary flywheel (17);
further accelerating the primary flywheel (15) and the secondary flywheel (17) once the secondary flywheel (17) has achieved the rotation speed of the primary flywheel (15).

19. A method for braking a driven machine (5) actuated by means of a power source (3) and a mechanical transmission (7) associated with a composite flywheel (13) having: a primary flywheel (15) integral with an input shaft (31); a secondary flywheel (17) coaxial with the primary flywheel (15), the secondary flywheel (17) and the primary flywheel (15) being coupled so that they can rotate freely with respect to each other; a coupling device (61) adapted selectively to transmit power from the input shaft (31) to the secondary flywheel (17) and to disengage the secondary flywheel (17) from the input shaft (31); said method comprising the step of disengaging the secondary flywheel (17) from the primary flywheel (15) through the coupling device (61), and braking the driven machine (5) with the secondary flywheel (17) idle with respect to the mechanical transmission (17).

20. A composite flywheel (13), comprising:
- a power input shaft (31);
- a primary flywheel (15) torsionally constrained to the input shaft (31);
- a secondary flywheel (17) torsionally constrained to a support shaft (41) of the secondary flywheel (17) coaxial with the primary flywheel (15); the secondary flywheel (17) and the primary flywheel (15) being coupled so that they can rotate freely with respect to each other;
- a coupling device (61) adapted selectively to couple and decouple torsionally the primary flywheel (15) and the secondary flywheel (17) with respect to each other;
**characterized by** a power output shaft (19), on which the secondary flywheel (17) is rotatably supported; wherein bearings (47, 49) arranged inside the support shaft (41) of the secondary flywheel (17) are configured for rotatably supporting the secondary flywheel (17) on the output shaft (19); wherein the primary flywheel (15) is integral with a support shaft (39) of the primary flywheel (15), coaxial with the support shaft (41) of the secondary flywheel (17), and wherein bearings (43, 45) are interposed between the support shaft (39) of the primary flywheel (15) and the support shaft (41) of the secondary flywheel (17) and rotatably support the support shaft (39) of the primary flywheel (15) and the support shaft (41) of the secondary flywheel (17), one with respect to the other.
